# EUROPÄISCHE PATENTSCHRIFT

(11) **EP 2 465 646 B1**
(45) Veröffentlichungstag und Bekanntmachung des Hinweises auf die Patenterteilung: **20.09.2017**
(21) Anmeldenummer: 11186095.3
(22) Anmeldetag: 21.10.2011
(51) Int. Cl.: B25F 5/00, H02K 11/28

(54) **Elektromotor für eine Elektrowerkzeugmaschine**
Electric motor for an electric machine tool
Moteur électrique pour une machine-outil électrique

(30) Priorität: 17.12.2010 DE 202010016739 U
(43) Veröffentlichungstag der Anmeldung: 20.06.2012
(73) Patentinhaber: Metabowerke GmbH, 72622 Nürtingen (DE)
(72) Erfinder: Schmohl, Michael, 72119 Ammerbuch (DE)
(74) Vertreter: Markfort, Iris-Anne Lucie

(56) Entgegenhaltungen:
- DE-A1-102009 002 421
- US-A1- 2002 100 597

## Beschreibung

Die Erfindung betrifft einen Elektromotor für eine Elektrowerkzeugmaschine umfassend einen um eine Längsachse des Elektromotors drehbaren Rotor und einen diesen zumindest teilweise umgreifenden Stator, wobei zwischen einer Innenumfangsfläche des Stators und einer Außenumfangsfläche des Rotors ein Luftspalt ausgebildet ist. Weiterhin umfasst der Elektromotor einen Schaltschieber zur Aktivierung des Elektromotors, wobei der Schaltschieber wenigstens ein Schaltorgan aufweist, das mit einem Ein-/Aus-Schalter des Elektromotors zusammenwirken kann und relativ verschiebbar zu dem Elektromotor angeordnet ist, wobei sich das Schaltorgan im Wesentlichen entlang der Längsachse des Elektromotors durch den Luftspalt zwischen Rotor und Stator erstreckt.

Elektromotoren, die einen Stator und einen Rotor umfassen, werden häufig bei Haushaltsgeräten und Elektrowerkzeugmaschinen eingesetzt und können von einem Wechselstromnetz gespeist werden, wobei gegebenenfalls auch ein Gleichrichter verwendet werden kann.

Grundsätzlich fallen in einem Elektromotor verschiedene Arten von Verlusten an, die in Summe die Verlustleistung bilden, welche die zur Verfügung stehende Nutzleistung des Elektromotors verringert. Neben der gewünschten Leistung sind es folglich die Verluste (und die zulässige Erwärmung)eines Motors, welche die Größe, d.h. die Abmessungen, eines Motors bestimmen. Allgemein lassen sich die Verluste in materialabhängige Verluste (Kupferverluste, Eisenverluste) und materialunabhängige Verluste unterteilen, wobei letztere vornehmlich von der Konstruktion des Motors abhängen. So ist es notwendig, eine ausreichende Motorkühlung zu gewährleisten und Reibungsverluste innerhalb des Motors möglichst gering zu halten. Weiterhin können auch Strömungsverluste einer Luftströmung innerhalb des Motors die Leistung verringern.

Eine Anforderung, die seit Jahren an Elektrowerkzeugmaschinen gestellt wird, besteht darin, zunehmend höhere Leistungen bei gleichbleibender Gerätegröße oder bei einer gleichzeitigen Reduktion der Gerätegröße zu bieten.

Bei Elektrowerkzeugmaschinen, bei denen der Elektromotor in einem Gehäuseteil im Griffbereich des Anwenders angeordnet ist, wie zum Beispiel bei Winkelschleifern, Geradschleifern oder Polierern, kommt dem Durchmesser des Elektromotors eine besondere Bedeutung zu, da er einen direkten Einfluss auf den Griffdurchmesser und damit auf den Umfang des Griffteils hat. Gerade bei solchen Elektrowerkzeugmaschinen sollte der Umfang des Gehäuseteils, das den Handgriff bildet (das sogenannte Fadenmaß) für eine möglichst komfortable Handhabung der Elektrowerkzeugmaschine ein gewisses Maß nicht überschreiten. Aus diesem Grund ist es seit langem eine Aufgabe im Zusammenhang mit derartigen Elektrowerkzeugmaschinen, das Fadenmaß zu reduzieren.

Doch nicht nur die Geometrie des innerhalb des Griffteils aufgenommenen Elektromotors beeinflusst das Fadenmaß. So wird bei einer Vielzahl von Elektrowerkzeugmaschinen im Stand der Technik der Motor über eine Betätigung eines Schaltknopfes in Betrieb genommen, der an der Außenumfangsfläche des Motorgehäuseteils angeordnet ist. Ein mit dem Schaltknopf verbundene Schaltstange wird im Inneren des Gehäuses an dem Elektromotor vorbei in den hinteren Bereich des Geräts geführt, um dort einen elektrischen Schalter innerhalb des Gerätegehäuses zu betätigen. Somit muss das Gehäuse im Griffbereich nicht nur den Elektromotor umgeben, sondern zudem die Schaltstange und gegebenenfalls einen Luftspalt zwischen Elektromotor und Gehäuse, der für eine ausreichende Kühlung erforderlich sein kann bzw. ist.

Die DE 10 2007 025 009 A1 schlägt daher vor, den Stator eines Elektromotors so auszubilden, dass Wicklungshalterungen zur Aufnahme von Feldwicklungen innenumfänglich entlang des Querschnitts inhomogen so verteilt sind, dass entlang eines inneren Statorumfangs wenigstens ein erster Bereich mit einer geringeren Dichte von Feldwicklungen ausgebildet ist als in einem benachbarten zweiten Bereich. Durch die asymmetrische Anordnung der Wicklungshalterungen wird in dem ersten Bereich beim Einbau in ein übliches Gehäuse ein Freiraum geschaffen, der für Bauelemente jeglicher Art, beispielsweise zur Aufnahme und Durchführung einer Schaltstange, genutzt werden kann.

Grundsätzlich bedeutet dies jedoch für die Fertigung von Elektromotoren, dass in Abhängigkeit von der Elektrowerkzeugmaschine, in die der Elektromotor eingesetzt werden soll, die Geometrie des Stators verändert werden muss. Dementsprechend lassen sich für die einzelnen Motoren nur geringere Stückzahlen an Statoren fertigen, was zu erhöhten Herstellkosten führt.

Aus der DE 32 01 744 C2 ist zudem ein Schaltschieber für Elektrowerkzeuge bekannt.

Aus der deutschen Offenlegungsschrift DE 10 2009 002 421 A1 ist ferner eine Elektrowerkzeugmaschine mit einem Gehäuse bekannt, wobei in dem Gehäuse ein elektrischer Antrieb mit einem Schalter zum Ein- und Ausschalten des elektrischen Antriebs angeordnet ist. In einem Griffbereich des Gehäuses ist zudem eine Schaltknopfeinheit zur Betätigung des Schalters des elektrischen Antriebs vorgesehen, die über ein Schiebeelement mit dem Schalter verbunden ist. Das Schiebeelement ist zumindest teilweise in eine Polpaketeinheit des elektrischen Antriebs integriert. Hierzu sind an dem Polschuheinheiten der Polpaketeinheit jeweils Durchgangslöcher vorgesehen, durch welche sich das stangenförmige Schiebeelement erstrecken kann.

Die vorliegende Erfindung löst die Aufgabe, einen Elektromotor mit einem einfachen und kompakten Aufbau bereitzustellen, der eine Reduzierung des Fadenmaßes ohne eine Verringerung der abgegebenen Leistung sicherstellt.

Diese Aufgabe wird durch einen erfindungsgemässen Elektromotor für eine Elektrowerkzeugmaschine gelöst, der einen um eine Längsachse des Elektromotors drehbaren Rotor und einen diesen zumindest teilweise umgreifenden Stator umfasst, wobei zwischen einer Innenumfangsfläche des Stators und einer Außenumfangsfläche des Rotors ein Luftspalt ausgebildet ist, sowie einen Schaltschieber zur Aktivierung des Elektromotors, wobei der Schaltschieber wenigstens ein Schaltorgan aufweist, das mit einem Ein-/Aus-Schalter des Elektromotors zusammenwirken kann und relativ verschiebbar zu diesem angeordnet ist. Der Elektromotor zeichnet sich ferner dadurch aus, dass sich das Schaltorgan im Wesentlichen entlang der Längsachse des Elektromotors durch den Luftspalt zwischen Stator und Rotor erstreckt. Zudem weist das Schaltorgan wenigstens in dem Bereich, der sich durch den Luftspalt erstreckt, im Querschnitt betrachtet, an seiner dem Rotor zugewandten Seite eine im Wesentlichen kreisförmige Krümmung auf, die konzentrisch zu dem Außenumfang des Rotors verläuft bzw. deren Krümmungsmittelpunkt mit der Längsachse des Elektromotors zusammenfällt.

In diesem Zusammenhang bezeichnet ein Querschnitt eine Schnittansicht, wobei die Schnittebene senkrecht zu der Längsachse des Elektromotors verläuft.

Der erfindungsgemäße Elektromotor nutzt dabei den zur Verfügung stehenden Luftspalt zwischen Stator und Rotor, um darin das Schaltorgan zumindest abschnittsweise aufzunehmen, wodurch eine äußerst kompakte Bauweise des Elektromotors ermöglicht wird. Weiterhin ist es nicht notwendig, die Geometrie des Rotors oder Stators in einer Weise, wie dies aus dem Stand der Technik bekannt ist, anzupassen, so dass bei der Herstellung des Stators und des Rotors unberücksichtigt bleiben kann, in welche Gehäusegeometrie der Motor später einmal eingesetzt wird. Infolge der kompakten Bauweise des Elektromotors kann der Umfang des Motorgehäuseteils verringert werden, da dieses nicht mehr das Schaltorgan des Schaltschiebers aufnehmen muss, wodurch die gewünschte Reduzierung des Fadenmaßes erreicht werden kann. Das Fadenmaß des Geräts wird somit alleinig durch die Statorgeometrie bestimmt.

Durch die kreisförmige Krümmung, die das Schaltorgan an seiner dem Rotor zugewandten Seite aufweist, wird die Geometrie des Stators, welche üblicherweise auch an den Außenumfang des Rotors angepasst ist, durch die Geometrie des Schaltorgans aufgegriffen. Auf diese Weise wird gewährleistet, dass die Luftströmung durch den nunmehr begrenzten Belüftungsraum des Motors nicht durch die Geometrie des Schaltorgans gestört wird. Eine ausreichende Motorkühlung bleibt somit erhalten, während Strömungsverluste im Luftspalt des Motors weiterhin gering gehalten werden können.

Das Schaltorgan kann zudem wenigstens in dem Bereich, der sich durch den Luftspalt erstreckt, an seiner dem Stator zugewandten Seite eine mit der Innenumfangsfläche des Stators korrespondierende äußere Oberfläche aufweisen. Dabei umfasst der Begriff der Innenumfangsfläche des Stators auch Vorsprünge oder Vertiefungen, die sich an dieser befinden können, wobei die korrespondierende Oberfläche des Schaltorgans in diesem Bereich entsprechend korrespondierende Ausnehmungen oder Vorsprünge aufweist. Die korrespondierende Oberfläche ist dabei so gestaltet, dass beispielsweise ein Vorsprung an der Innenumfangsfläche des Stators in jeder Stellung des Schaltorgans in einer Ausnehmung an dessen korrespondierender Oberfläche aufgenommen werden kann, ohne die Relativbewegung des Schaltorgans gegenüber dem Stator zu behindern. Durch eine solche Ausbildung des Schaltorgans an seiner dem Stator zugewandten Seite wird eine noch kompaktere Bauweise des Elektromotors ermöglicht, ohne dass Leistungsverluste durch eine verringerte Motorkühlung oder durch Strömungsverluste im Luftspalt des Motors vergrößert werden.

Es kann vorgesehen sein, dass das Schaltorgan wenigstens eine Ausnehmung aufweist, die wenigstens ein sich von der Innenumfangsfläche des Stators in Richtung zu dem Rotor erstreckendes Element aufzunehmen vermag. Weiterhin kann das Schaltorgan wenigstens in dem Bereich, in dem es sich durch den Luftspalt erstreckt, eine sich entlang der Längsachse erstreckende Nut aufweisen, die zwei Längsschenkel des Schaltorgans voneinander trennt. Eine solche Nut kann das Schaltorgan in dem Bereich, der sich durch den Luftspalt erstreckt, durchsetzen oder nur eine Vertiefung in diesem Bereich bilden. In beiden Fällen wird durch den verringerten Querschnitt des Schaltorgans in dem Bereich, in dem die Nut ausgebildet ist, die Luftströmung an dem Schaltorgan vorbei zusätzlich verbessert.

Das Schaltorgan kann im Betrieb des Motors mehreren Belastungen ausgesetzt sein. Grundsätzlich dient das Schaltorgan dazu, mit dem Ein-Aus-Schalter des Elektromotors zusammenzuwirken, um letzteren zu aktivieren bzw. zu deaktivieren. Üblicherweise handelt es sich, wie vorstehend ausgeführt, bei einem solchen Ein-/Aus-Schalter des Elektromotors um einen Druckknopf, der entweder durch eine integrierte Feder vorgespannt ist oder mit einer separaten Feder kombiniert ist, die eine Rückstellbewegung des Schaltorgans und des Druckknopfes ermöglicht. Zum einen kann es dazu vorgesehen sein, einen Druckschalter zum Ein- oder Ausschalten des Elektromotors in einer gedrückten Position zu halten. Derartige Druckschalter sind üblicherweise in ihrer Aus-Stellung (d.h. in einer Stellung, in der der Elektromotor ausgeschaltet ist) federnd vorgespannt, so dass das Schaltorgan eine Kraft auf den Druckschalter ausüben muss, die größer ist als die Federkraft des vorgespannten Druckschalters, um den Elektromotor einzuschalten. Somit wird das Schaltorgan an dem Bereich, an dem es auf den Druckschalter einwirkt, mit der Rückstellkraft der Feder beaufschlagt. Zugleich wird durch den Anwender bei der Betätigung des Schaltschiebers das Schaltorgan in eine zu der Rückstellkraft der Feder entgegengesetzte Richtung gezogen. Dies resultiert in einer auf das Schaltorgan einwirkenden Zugbelastung, solange dieses den Druckschalter in einer gedrückten Position halten muss. Zudem wird das Schaltorgan, das zwischen Stator und Rotor des Elektromotors geführt ist, bei Betrieb des Elektromotors durchaus auch Betriebstemperaturen von bis zu 200 C° ausgesetzt.

In dem Fall, in dem die Nut das Schaltorgan durchsetzt, so dass zwischen den zwei Längsschenkeln des Schaltorgans kein Material mehr vorhanden ist, kann bei diesen Belastungen des Schaltorgans das Risiko einer Einschnürung des Schaltorgans im Bereich seiner Zweiteilung entstehen. Um dem entgegenzuwirken, kann vorgesehen sein, dass im Bereich der Nut wenigstens ein zu der Längsachse des Elektromotors quer verlaufender Steg ausgebildet ist, der die beiden Längsschenkel des Schaltorgans miteinander verbindet und gegeneinander abstützt.

Um eine Störung des elektromagnetischen Feldes zwischen Stator und Rotor zu vermeiden, kann ferner vorgesehen sein, dass das Schaltorgan aus einem nichtmagnetisierbaren Material hergestellt ist. Hierfür sind beispielsweise Kunststoffe durchaus geeignet. Zudem kann das Schaltorgan aus einem Material hergestellt sein, das nicht elektrisch leitfähig ist, um die Sicherheit des Elektromotors zu gewährleisten. Auch in diesem Zusammenhang sind beispielsweise Kunststoffe sehr gut geeignet.

Um ferner sicherzustellen, dass die von dem Schaltorgan zu übertragenden Schaltkräfte, wenn dieses mit dem Ein-/Aus-Schalter des Elektromotors zusammenwirkt, auch bei hohen Betriebstemperaturen des Elektromotors erbracht werden können, kann das Schaltorgan aus einem hochtemperaturfähigen Material hergestellt sein, das eine Verformungsresistenz bei Betriebstemperaturen von bis zu etwa 200° Celsius aufweist. Beispielsweise kann das Schaltorgan aus einem hochtemperaturfähigen Kunststoff, wie glasfaserverstärktes Polyamid, hergestellt sein.

Das Schaltorgan kann eine Schaltstange umfassen, die einen ersten Endabschnitt mit einer Ausnehmung zur Verbindung mit einem manuell betätigbaren Schaltelement des Schaltschiebers aufweist, sowie einen zweiten Endabschnitt mit einer Anlageschulter zur Übertragung einer in Längsrichtung wirkenden Kraft auf den Ein-/Aus-Schalter des Elektromotors. Üblicherweise handelt es sich, wie vorstehend ausgeführt, bei einem solchen Ein-/Aus-Schalter des Elektromotors um einen Druckknopf, der entweder durch eine integrierte Feder vorgespannt ist oder mit einer separaten Feder kombiniert ist, die eine Rückstellbewegung des Schaltorgans und des Druckknopfes ermöglicht. Dementsprechend ist die Schaltstange, solange der Druckknopf während des Betriebs des Motors in seiner Ein-Stellung gehalten werden muss, auf Zug belastet, da diese der Kraft der Rückstellfeder entgegenwirkten muss.

In einer Weiterbildung der Erfindung kann vorgesehen sein, dass das manuell betätigbare Schaltelement wenigstens ein Rastmittel zur verrastenden Verbindung mit der Ausnehmung an der Schaltstange aufweist. Eine solche Rastverbindung des Schaltelements mit der Schaltstange ermöglicht eine besonders einfache Montage. Alternativ sind jedoch auch andere Verbindungsmethoden denkbar, beispielsweise weitere form-, kraft- oder stoffschlüssige Verbindungen des Schaltelements mit dem ersten Endabschnitt der Schaltstange.

Die vorliegende Erfindung betrifft ferner eine Elektrowerkzeugmaschine mit einem innerhalb eines Motorgehäuseteils angeordneten Elektromotor, der die vorstehend beschriebenen Merkmale aufweist, wobei das Motorgehäuseteil im Wesentlichen zylinderförmig ausgebildet ist, wobei das manuell betätigbare Schaltelement des Schaltschiebers an der äußeren Mantelfläche des Motorgehäuseteils angeordnet ist und relativ zu dem Motorgehäuseteil verlagerbar ist, und wobei die damit verbundene Schaltstange eine translatorische Bewegung des Schaltelements auf den Ein-/Aus-Schalter des Elektromotors zu übertragen vermag, um den Elektromotor zu aktivieren oder zu deaktivieren.

Schließlich ist ein Schaltorgan für einen Elektromotor Teil der vorliegenden Erfindung, wobei das Schaltorgan die vorstehend beschriebenen Merkmale aufweist.

Die Erfindung wird nachfolgend unter Bezugnahme auf die beigefügten Figuren beschrieben, die eine bevorzugte Ausführungsform der Erfindung darstellen.

Es zeigen schematisch:
- Fig. 1: eine isometrische Ansicht einer erfindungsgemäßen Elektrowerkzeugmaschine;
- Fig. 2: die erfindungsgemäße Elektrowerkzeugmaschine gemäß Fig. 1 ohne Gehäuseteile im Griffbereich;
- Fig. 3: die erfindungsgemäße Elektrowerkzeugmaschine gemäß Fig. 1 und 2 ohne Stator;
- Fig. 4: eine längsgeschnittene Ansicht der erfindungsgemäßen Elektrowerkzeugmaschine gemäß Fig. 1;
- Fig. 5A und 5B: eine quergeschnittene Ansicht der Elektrowerkzeugmaschine gemäß Fig. 4, wobei Fig. 5B eine Detailansicht des Details B der Fig. 5A darstellt; und
- Fig. 6: eine isometrische Ansicht der erfindungsgemäßen Schaltstange.

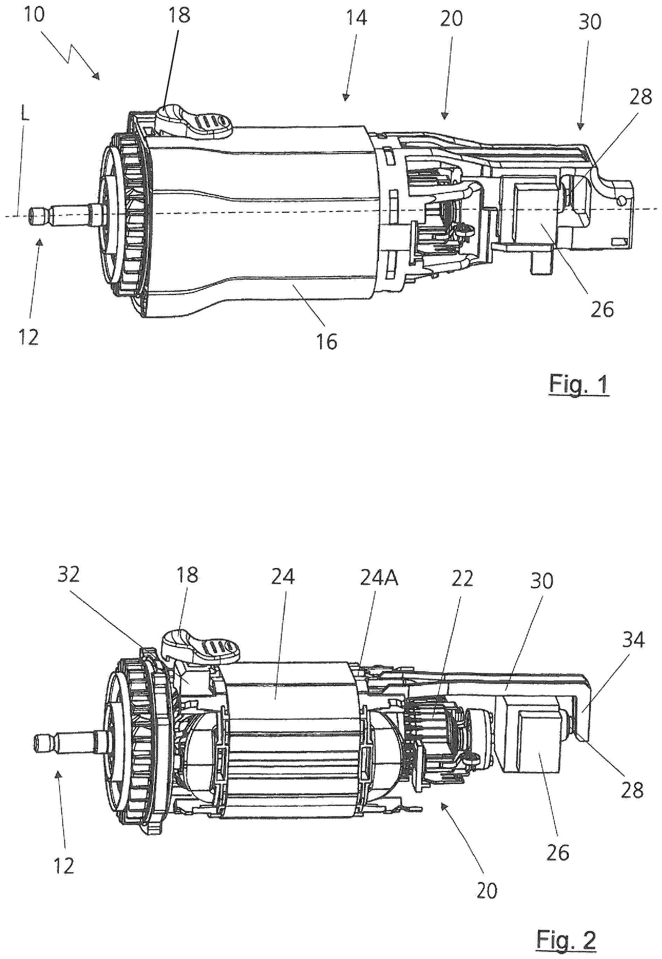

Die Fig. 1 zeigt eine erfindungsgemäße Elektrowerkzeugmaschine, die allgemein mit dem Bezugszeichen 10 versehen ist. Die Elektrowerkzeugmaschine 10 umfasst einen werkzeugseitigen Abtrieb 12 sowie ein entlang einer Längsachse L betrachtet vorgeschaltetes Griffteil 14. Das Griffteil 14 umfasst mehrere Gehäuseteile 16, wobei ein erstes Gehäuseteil 16 in Topfbauweise zwischen dem Abtrieb 12 und zwei halbschalenartig zusammengefügten Gehäuseteilen angeordnet ist. Gemeinsam bilden die Gehäuseteile 16 das Griffteil 14 der Elektrowerkzeugmaschine 10. In der dargestellten Ausführungsform ist nur das erste Gehäuseteil 16 gezeigt, wobei dieses anstelle seiner topfartigen Form ebenfalls halbschalenförmig oder durch mehrere Gehäuseteile ausgebildet sein kann. Die beiden den Griff abschließenden Gehäuseteile, die üblicherweise halbschalenförmig ausgebildet sind, jedoch grundsätzlich auch eine andere Form aufweisen können, sind in der Fig. 1 nicht dargestellt, um einen Einblick in das Innere der Gehäuseteile zu ermöglichen (in Fig. 1 rechts).

Innerhalb der Gehäuseteile 16 des Griffteils 14 ist ferner ein Elektromotor 20 aufgenommen, der über einen Schaltschieber aktiviert und deaktiviert werden kann. Hierzu weist der Schaltschieber ein Schaltelement 18 auf, das von einem Anwender manuell betätigt werden kann. Das Schaltelement 18 ist, wie in Fig. 1 deutlich gezeigt ist, im Griffbereich der Elektrowerkzeugmaschine 10 an der Außenumfangsfläche der Gehäuseteile 16 angeordnet. Eine solche Anordnung des Schaltelements 18 ermöglicht eine einfache und unkomplizierte Handhabung für einen Anwender, da dieser ohne die Hand von dem Griffteil 14 der Elektrowerkzeugmaschine 10 lösen zu müssen, dieses mit Hilfe des Schaltelements 18 ein- und ausschalten kann.

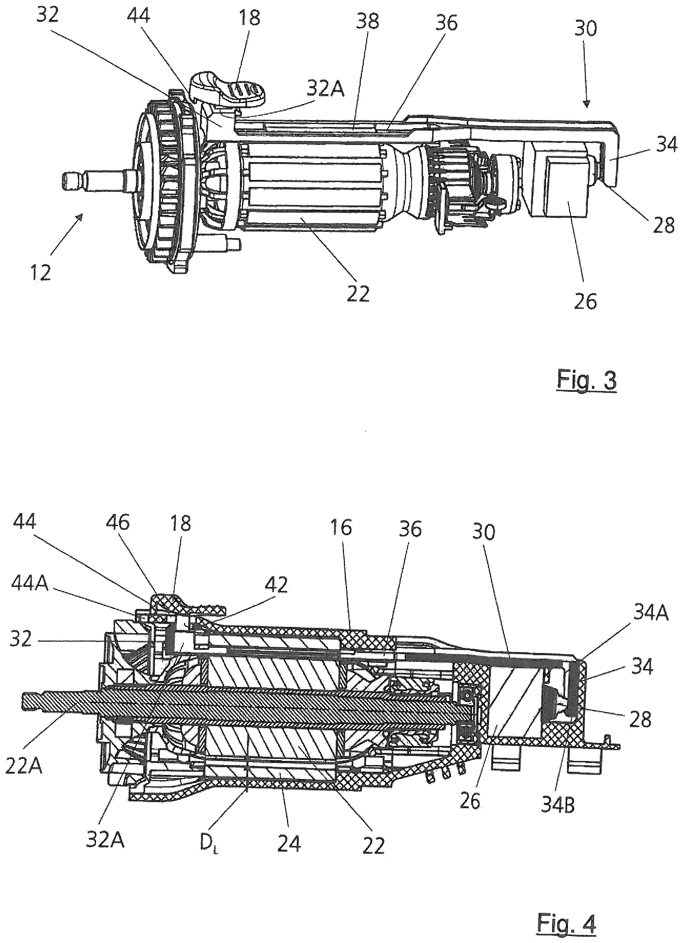

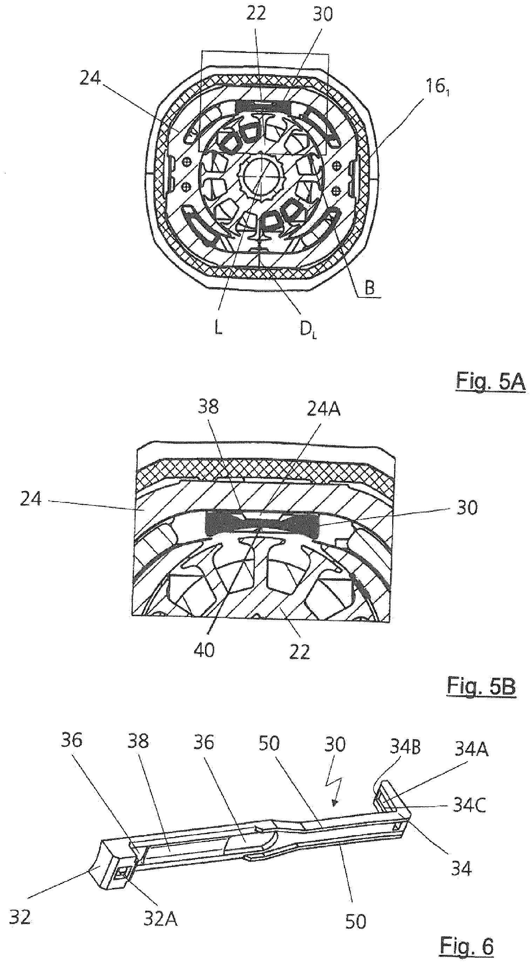

Wie in den Fig. 2 und 3 deutlicher zu erkennen ist, ist das Schaltelement 18 mit einer Schaltstange 30 als Schaltorgan des Schaltschiebers verbunden, um den Elektromotor 20 ein- und auszuschalten. Der Elektromotor 20 umfasst in üblicher Weise einen Rotor 22, der um die Längsachse L drehbar und mit einer Rotorabtriebswelle 22A (vgl. Fig. 4) fest verbunden ist, sowie einen Stator 24, der den Rotor 22 zumindest teilweise umgreift (vgl. Fig. 2). Zwischen dem Rotor 22 und dem Stator 24 des Elektromotors 20 ist, bedingt durch die Geometrie des Stators 24 (vgl. Querschnitt der Fig.5A), üblicherweise ein Luftspalt D_{L} ausgebildet. Dieser ermöglicht eine Belüftung des Elektromotors 20 und verringert auf diese Weise Leistungsverluste des Elektromotors 20 durch Überhitzung.

Der Elektromotor 20 weist zudem eine Aktivierungseinheit 26 mit einem Ein-/Aus-Schalter auf, der als Druckschalter 28 ausgebildet ist. Der Druckschalter 28 ist dabei in seiner Aus-Stellung, in der die Aktivierungseinheit 26 den Elektromotor 20 nicht mit Strom versorgt, durch eine in den Druckschalter 28 integrierte Druckfeder (nicht dargestellt) vorgespannt. Um mit Hilfe der Aktivierungseinheit 26 den Elektromotor 20 einzuschalten, ist es daher notwendig, den Druckschalter 28 in Richtung zu dem Elektromotor 20 gegen die Wirkung der integrierten Feder zu drücken. Die Schaltstange 30 übernimmt dabei die Aufgabe, eine translatorische Verlagerung des Schaltelements 18 entlang der Längsachse L auf den Druckschalter 28 zu übertragen. Hierzu weist diese an ihrem ersten Endabschnitt 32 eine Ausnehmung zur Verbindung mit dem Schaltelement 18 auf, wie nachfolgend unter Bezugnahme auf Fig. 4 näher erläutert wird. Weiterhin ist an ihrem zweiten Endabschnitt 34 eine Anlageschulter 34A mit einer Nase 34B ausgebildet, mit der die Schaltstange 30 bei einer translatorischen Bewegung des Schaltelements 18 in Richtung zu dem werkzeugseitigen Abtrieb 12 eine Druckkraft auf den Druckschalter 28 ausübt.

Eine Besonderheit der vorliegenden Erfindung besteht darin, dass die Schaltstange 30 nicht, wie üblich, zwischen dem Stator und dem Gehäuse geführt ist, sondern sich, wie in den Fig. 2 und 4 deutlich erkennbar ist, durch den Luftspalt D_{L} zwischen Rotor 22 und Stator 24 erstreckt. Auf diese Weise ist es möglich, die beiden halbschalenförmigen Gehäuseteile 16, deren Außenumfang das sogenannte Fadenmaß definiert, an der Außengeometrie des Stators 24 zu orientieren.

Lässt man gegenüber den aus dem Stand der Technik bekannten Elektrowerkzeugmaschinen das Fadenmaß des Griffteils 14 unverändert, so kann folglich ein größerer Elektromotor mit einer höheren Leistung eingebaut werden. Alternativ kann unter Verwendung eines Elektromotors mit gleichbleibender Leistung durch die kompakte Anordnung der Schaltstange das Fadenmaß gegenüber dem Stand der Technik verringert werden.

Um eine noch kompaktere Bauweise zu ermöglichen und zugleich das Risiko einer Überhitzung des Elektromotors 20 zu verringern, weist die Schaltstange 30 eine spezielle Geometrie auf. So umfasst die Schaltstange 30 in einem Bereich, der sich zwischen Stator 24 und Rotor 22 erstreckt, eine Ausnehmung 36, die sich als seitlich geöffnete Nut von dem ersten Endabschnitt 32 entlang der Längsachse L erstreckt und die Schaltstange 30 durchsetzt. Im Bereich der Ausnehmung 36 ist die Schaltstange 30 folglich zweigeteilt und weist zwei parallel zueinander verlaufende Längsschenkel auf. Diese beiden Längsschenkel sind zudem durch einen Steg 38 verbunden, der als Abstandshalter dient und die beiden Schenkel auch unter dem Einfluss von auftretenden Betriebstemperaturen von bis zu 200°C und einer auf die Schaltstange 30 einwirkenden Zugbelastung, wenn der Druckschalter 28 durch die Schaltstange 30 gedrückt gehalten wird, in ihrer relativen Stellung zueinander stabilisiert.

Die Ausnehmung 32A des ersten Endabschnitts 32 der Schaltstange 30 dient, wie bereits vorstehend ausgeführt, zur Verbindung der Schaltstange 30 mit dem Schaltelement 18. Dieses weist hierfür Rastmittel 42 auf, wie beispielsweise Rasthaken oder dergleichen, die sich durch eine Öffnung 46 im Gehäuseteil 16 erstrecken und rastend in die Ausnehmung 32A eingreifen. Wird das Schaltelement 18 folglich von einem Anwender in einer translatorischen Bewegung entlang der Längsachse L nach vorne, d.h. in Richtung zu dem werkzeugseitigen Abtrieb 12 bewegt, so wird diese Bewegung auf die mit Hilfe des Rastmittels 42 verbundene Schaltstange 30 übertragen. Diese drückt dann mit ihrem zweiten Endabschnitt 34, insbesondere der Schulter 34A, gegen den Druckschalter 28.

Das Schaltelement 18 weist zudem eine Nase 44 auf, die in eine korrespondierende Ausnehmung 44A an dem Gehäuseteil 16 aufgenommen werden kann, um das Schaltelement 18 in seiner Stellung, vorzugsweise der Ein-Stellung, zu halten. Dabei kann der Kopf des Schaltelements 18 mit seiner Nase 44 um eine Achse leicht verschwenkbar oder nachgiebig gestaltet sein, so dass er beispielsweise durch Druck auf das jeweils andere Ende des Kopfes aus der Ausnehmung 44A geschwenkt werden kann oder durch Zug an dem Ende, an dem die Nase 44 ausgebildet ist, diese aus der Ausnehmung 44A herausgezogen werden kann.

Wie bereits vorstehend ausgeführt wurde, ist für die Leistungsfähigkeit eines Elektromotors von besonderer Bedeutung, dass dieser ausreichend belüftet wird. Um die Luftströmung durch den nunmehr begrenzten Belüftungsraum des Motors in dem Bereich, in dem die Schaltstange 30 zwischen Stator 24 und Rotor 22 aufgenommen ist, nicht durch die Geometrie der Schaltstange 30 zu stören, ist diese im Querschnitt betrachtet (vgl. Fig. 5A und 5B) mit einer dem Rotor 22 zugewandten gekrümmten Oberfläche 40 versehen, die an die Geometrie des Feldes, d. h. des Stators 24 in den Nachbarbereichen, angepasst ist. Infolgedessen ist die Oberfläche 40 im Querschnitt betrachtet mit einer im Wesentlichen kreisförmigen Krümmung versehen, die konzentrisch zu dem Außenumfang des Rotors 22 verläuft bzw. deren Krümmungsmittelpunkt mit der Längsachse L des Elektromotors 20 zusammenfällt.

Weiterhin dient die Ausnehmung 36 an der Schaltstange 30 nicht nur dazu, Material zu sparen und eine Belüftung des Elektromotors 20 zu unterstützen, sondern auch dazu, um Elemente 24A des Stators 24, die von dessen Innenumfangsfläche in Richtung zu dem Rotor 22 vorstehen, aufnehmen zu können. Auf diese Weise wird wiederum eine noch kompaktere Bauweise des Elektromotors 20 ermöglicht.

Um die Motorbelüftung weiter zu verbessern, weist die Schaltstange 30 schließlich an ihrer dem Gehäuseteil 16 zugewandten Seite seitliche Strömungsschienen 50 auf, die eine Luftströmung entlang der Schaltstange 30 in das Innere des Elektromotors 20 verbessern.

Die Zugkraft, die infolge einer Translationsbewegung des Schaltelements 18 in die Schaltstange 30 eingeleitet wird, verläuft parallel zu der auf den Druckschalter 28 einwirkenden Druckkraft, die von dem zweiten Endabschnitt 34 der Schaltstange 30 auf den Druckschalter 28 übertragen wird. Folglich entsteht ein auf die Anlageschulter 34A des zweiten Endabschnitts 34 einwirkendes Biegemoment. Um zu vermeiden, dass infolge dieses Biegemoments die Schulter 34A der Schaltstange 30 verformt wird und dadurch nicht mehr an dem Druckschalter 28 anliegt, weist diese endseitig eine Nase 34B auf, die den Druckschalter 28 hintergreift. Bei der Fertigung wird diese Rastnase 34B durch Herstellen des Durch-/Ausbruchs 34C erzeugt.

Zusammenfassend wird mit der vorliegenden Erfindung eine kompaktere Bauweise der Elektromotors ermöglicht, wodurch das Fadenmaß reduziert werden kann, ohne dass deswegen die Leistung des Elektromotors verringert werden muss.

## Patentansprüche

1. Elektromotor (20) für eine Elektrowerkzeugmaschine (10), umfassend einen um eine Längsachse (L) des Elektromotors (20) drehbaren Rotor (22) und einen diesen zumindest teilweise umgreifenden Stator (24), wobei zwischen einer Innenumfangsfläche des Stators (24) und einer Außenumfangsfläche des Rotors (22) ein Luftspalt (D_{L}) ausgebildet ist, sowie einen Schaltschieber zur Aktivierung des Elektromotors (20), wobei der Schaltschieber wenigstens ein Schaltorgan (30) aufweist, das mit einem Ein-Aus-Schalter (28) des Elektromotors (20) zusammenwirken kann und relativ verschiebbar zu diesem angeordnet ist, wobei sich das Schaltorgan (30) im Wesentlichen entlang der Längsachse (L) des Elektromotors (20) durch den Luftspalt (D_{L}) zwischen Rotor (22) und Stator (24) erstreckt, **dadurch gekennzeichnet, dass** das Schaltorgan (30) wenigstens in dem Bereich, der sich durch den Luftspalt (D_{L}) erstreckt, im Querschnitt betrachtet an seiner dem Rotor (22) zugewandten Seite eine im wesentlichen kreisförmige Krümmung aufweist, die konzentrisch zu dem Außenumfang des Rotors (22) verläuft.

2. Elektromotor (20) nach Anspruch 1, **dadurch gekennzeichnet, dass** das Schaltorgan (30) wenigstens in dem Bereich, der sich durch den Luftspalt (D_{L}) erstreckt, an seiner dem Stator (24) zugewandten Seite eine mit der Innenumfangsfläche des Stators (24) korrespondierende äußere Oberfläche aufweist.

3. Elektromotor (20) nach einem der Ansprüche 1 oder 2, **dadurch gekennzeichnet, dass** das Schaltorgan (30) wenigstens eine Ausnehmung (36) aufweist, die wenigstens ein sich von der Innenumfangsfläche des Stators (24) in Richtung zu dem Rotor (22) erstreckendes Element (24A) aufzunehmen vermag.

4. Elektromotor (20) nach einem der Ansprüche 1 bis 3, **dadurch gekennzeichnet, dass** das Schaltorgan (30) wenigstens in dem Bereich, der sich durch den Luftspalt (D_{L}) erstreckt, eine sich entlang der Längsachse (L) erstreckende Nut (36) aufweist, die zwei Längsschenkel des Schaltorgans (30) voneinander trennt.

5. Elektromotor (20) nach Anspruch 4, **dadurch gekennzeichnet, dass** im Bereich der Nut (36) wenigstens ein zu der Längsachse (L) quer verlaufender Steg (38) ausgebildet ist, der die beiden Längsschenkel des Schaltorgans (30) miteinander verbindet.

6. Elektromotor (20) nach einem der vorhergehenden Ansprüche, **dadurch gekennzeichnet, dass** das Schaltorgan (30) aus einem nichtmagnetisierbaren Material hergestellt ist.

7. Elektromotor (20) nach einem der vorhergehenden Ansprüche, **dadurch gekennzeichnet, dass** das Schaltorgan (30) aus einem nicht elektrisch leitfähigen Material hergestellt ist.

8. Elektromotor (20) nach einem der vorhergehenden Ansprüche, **dadurch gekennzeichnet, dass** das Schaltorgan (30) aus einem hochtemperaturfähigen Material hergestellt ist, das eine Verformungsresistenz bei Betriebstemperaturen von etwa bis zu 200° Celsius aufweist.

9. Elektromotor (20) nach einem der vorhergehenden Ansprüche, **dadurch gekennzeichnet, dass** das Schaltorgan (30) eine Schaltstange (30) umfasst, die einen ersten Endabschnitt (32) mit einer Ausnehmung (32A) zur Verbindung mit einem manuell betätigbaren Schaltelement (18) des Schaltschiebers aufweist sowie einen zweiten Endabschnitt (34) mit einer Anlageschulter (34A) zur Übertragung einer in Längsrichtung (L) wirkenden Kraft auf den Ein-Aus-Schalter (26) des Elektromotors (20).

10. Elektromotor (20) nach Anspruch 9, **dadurch gekennzeichnet, dass** das manuell betätigbare Schaltelement (18) wenigstens ein Rastmittel (42) zur verrastenden Verbindung mit der Ausnehmung (32A) an der Schaltstange (30) aufweist.

11. Elektrowerkzeugmaschine (10) mit einem innerhalb wenigstens eines Motorgehäuseteils (16) angeordneten Elektromotor (20) nach einem der Ansprüche 1 bis 10, wobei das wenigstens eine Motorgehäuseteil (16) im wesentlichen zylinderförmig ausgebildet ist, wobei das manuell betätigbare Schaltelement (18) des Schaltschiebers an der äußeren Mantelfläche des Motorgehäuseteils (16) angeordnet ist und relativ zu dem Motorgehäuseteil (16) verlagerbar ist, und wobei die damit verbundene Schaltstange (30) die Bewegung des Schaltelements (18) auf den Ein-Aus-Schalter (26) des Elektromotors (20) zu übertragen vermag, um den Elektromotor (20) zu aktivieren oder zu deaktivieren.

12. Schaltorgan (30) für einen Elektromotor (20), wobei das Schaltorgan (30) die Merkmale des Schaltorgans nach einem der Ansprüche 1 bis 10 aufweist.

## Claims

1. Electric motor (20) for an electric power tool (10), comprising a rotor (22) that is rotatable about a longitudinal axis (L) of the electric motor (20), and a stator (24) engaging at least in part around said rotor (22), wherein an air gap (D_{L}) is formed between an inner circumferential surface of the stator (24) and an outer circumferential surface of the rotor (22), and also a sliding switch for activating the electric motor (20), wherein the sliding switch has at least one switching member (30) which can interact with an on/off switch (28) of the electric motor (20) and is arranged so as to be displaceable relative thereto, wherein the switching member (30) extends substantially along the longitudinal axis (L) of the electric motor (20) through the air gap (D_{L}) between the rotor (22) and stator (24), **characterized in that** the switching member (30), as seen in cross section, has a substantially circular curvature on its side facing the rotor (22), at least in the region which extends through the air gap (D_{L}), said curvature extending concentrically with the outer circumference of the rotor (22).

2. Electric motor (20) according to Claim 1, **characterized in that** the switching member (30) has an outer surface corresponding to the inner circumferential surface of the stator (24) on its side facing the stator (24), at least in the region which extends through the air gap (D_{L}).

3. Electric motor (20) according to either of Claims 1 and 2, **characterized in that** the switching member (30) has at least one recess (36) which is able to receive at least one element (24A) extending from the inner circumferential surface of the stator (24) in the direction of the rotor (22).

4. Electric motor (20) according to one of Claims 1 to 3, **characterized in that** the switching member (30) has a groove (36) extending along the longitudinal axis (L), at least in the region which extends through the air gap (D_{L}), said groove separating two longitudinal legs of the switching member (30) from one another.

5. Electric motor (20) according to Claim 4, **characterized in that** at least one web (38) extending transversely to the longitudinal axis (L) is formed in the region of the groove (36), said web (38) connecting the two longitudinal legs of the switching member (30) together.

6. Electric motor (20) according to one of the preceding claims, **characterized in that** the switching member (30) is produced from a non-magnetizable material.

7. Electric motor (20) according to one of the preceding claims, **characterized in that** the switching member (30) is produced from a non-electrically-conductive material.

8. Electric motor (20) according to one of the preceding claims, **characterized in that** the switching member (30) is produced from a high-temperature-resistant material which has a resistance to deformation at operating temperatures of up to about 200° Celsius.

9. Electric motor (20) according to one of the preceding claims, **characterized in that** the switching member (30) comprises a switching rod (30) which has a first end portion (32) with a recess (32A) for connecting to a manually operable switching element (18) of the sliding switch, and also a second end portion (34) with a bearing shoulder (34A) for transmitting a force acting in the longitudinal direction (L) to the on/off switch (26) of the electric motor (20).

10. Electric motor (20) according to Claim 9, **characterized in that** the manually operable switching element (18) has at least one latching means (42) for connecting to the recess (32A) in the switching rod (30) in a latching manner.

11. Electric power tool (10) having an electric motor (20) according to one of Claims 1 to 10 arranged within at least one motor housing part (16), wherein the at least one motor housing part (16) is formed in a substantially cylindrical manner, wherein the manually operable switching element (18) of the sliding switch is arranged on the outer lateral surface of the motor housing part (16) and is displaceable relative to the motor housing part (16), and wherein the switching rod (30) connected thereto is able to transmit the movement of the switching element (18) to the on/off switch (26) of the electric motor (20) in order to activate or deactivate the electric motor (20).

12. Switching member (30) for an electric motor (20), wherein the switching member (30) has the features of the switching member according to one of Claims 1 to 10.

## Revendications

1. Moteur électrique (20) pour une machine-outil électroportative (10), comportant un rotor (22), rotatif autour d'un axe longitudinal (L) du moteur électrique (20) et un stator (24) qui l'entoure au moins partiellement, dans lequel une fente d'air (D_{L}) est ménagé entre une surface périphérique intérieure du stator (24) et une surface périphérique extérieure du rotor (22), ainsi qu'un commutateur coulissant pour l'actionnement du moteur électrique (20), dans lequel le commutateur coulissant comporte au moins un organe de commutation (30), qui peut coopérer avec un commutateur d'enclenchement et de déclenchement (28) du moteur électrique (20) et qui est adapté en mode coulissant par rapport à ce dernier, dans lequel l'organe de commutation (30) est essentiellement disposé le long de l'axe longitudinal (L) du moteur électrique (20), à travers la fente d'air (D_{L}) entre le rotor (22) et le stator (24), **caractérisé en ce que** l'organe de commutation (30), comporte sur son côté tourné vers rotor (22), au moins dans le secteur dans lequel il s'étend à travers la fente d'air (D_{L}), lorsqu'il est vue en coupe transversale, une courbure essentiellement circulaire concentrique par rapport à la périphérie du rotor (22).

2. Moteur électrique (20) selon la revendication 1, **caractérisé en ce que** l'organe de commutation (30), comporte, au moins dans le secteur qui s'étend à travers la fente d'air (D_{L}), de son côté tourné vers le stator (24), une surface superficielle extérieure correspondant à la surface intérieure du stator (24).

3. Moteur électrique (20) selon l'une des revendications 1 ou 2, **caractérisé en ce que**, l'organe de commutation (30), comporte, au moins un évidement (36) qui est en mesure d'accueillir un élément (24A) qui s'étend depuis la surface intérieure du stator (24) en direction du rotor (22).

4. Moteur électrique (20) selon l'une des revendications 1 à 3, **caractérisé en ce que** l'organe de commutation (30), comporte, au moins dans le secteur qui s'étend à travers la fente d'air (D_{L}), une nervure (36) disposée transversalement par rapport à l'axe longitudinal (L), qui sépare l'un de l'autre, deux membres longitudinaux de l'organe de commutation (30).

5. Moteur électrique (20) selon la revendication 4, **caractérisé en ce que**, dans le secteur de la nervure (36), au moins un pontage (38), transversal par rapport à l'axe longitudinal (L), est ménagé entre les deux membres longitudinaux de l'organe de commutation (30) en assurant leur liaison.

6. Moteur électrique (20) selon l'une des revendications précédentes, **caractérisé en ce que** l'organe de commutation (30) est réalisé en un matériau amagnétique.

7. Moteur électrique (20) selon l'une des revendications précédentes, **caractérisé en ce que** l'organe de commutation (30) est réalisé en un matériau électriquement non conducteur.

8. Moteur électrique (20) selon l'une des revendications précédentes, **caractérisé en ce que** l'organe de commutation (30) est réalisé en un matériau résistant aux hautes températures, ce qui donne une résistance aux déformations sous l'effet de hautes températures, qui atteignent approximativement 200° Celsius.

9. Moteur électrique (20) selon l'une des revendications précédentes, **caractérisé en ce que** l'organe de commutation (30) comporte une tige de commutation (30) qui comporte une première section d'extrémité (32) avec un évidement (32A) pour assurer la liaison avec un élément de commande manuel (18) du commutateur coulissant, ainsi qu'une deuxième section d'extrémité (34) avec une butée d'appui (34A) pour transmettre une force agissant dans la direction longitudinale (L) sur le commutateur d'enclenchement et de déclenchement (26) du moteur électrique (20).

10. Moteur électrique (20) selon la revendication 9, **caractérisé en ce que**, l'élément de commande manuel (18) comporte au moins un élément d'enclenchement (42) pour assurer une liaison engagée dans l'évidement (32A) ménagé dans la tige de commande (30).

11. Machine-outil électrique (10) comportant au moins un moteur électrique (20) disposé dans au moins un élément de boîtier de moteur (16), selon l'une des revendications 1 à 10, dans laquelle ledit au moins un élément de boîtier de moteur (16), a une forme essentiellement cylindrique, dans laquelle l'élément de commande manuel (18) du commutateur coulissant est disposé sur la face extérieure de la surface du manteau de l'élément de boîtier de moteur (16), et est mobile relativement à l'élément de boîtier de moteur (16), et dans laquelle la tige de commande (30) qui y est attachée est agencée pour transmettre le déplacement de l'élément de commande (18) au commutateur d'enclenchement et de déclenchement (26) du moteur électrique (20), pour activer ou désactiver le moteur électrique (20).

12. Organe de commande (30) pour un moteur électrique (20) dans lequel l'organe de commande (30) présente les caractéristiques de l'organe de commande selon l'une des revendications 1 à 10.
